# EUROPÄISCHE PATENTANMELDUNG

(11) **EP 1 619 774 A1**
(43) Veröffentlichungstag der Anmeldung: **25.01.2006**
(21) Anmeldenummer: 04017535.8
(22) Anmeldetag: 23.07.2004
(51) Int. Cl.: H02K 5/14, H02K 23/66, H02K 11/02

(54) **Bürstensystem für einen Kraftfahrzeug-Stellantrieb**

(71) Anmelder: SIEMENS AKTIENGESELLSCHAFT, 80333 München (DE)
(72) Erfinder: Viernekes, Gerald, 97437 Hassfurt (DE)

(57) **Zusammenfassung**

Die Erfindung betrifft ein Bürstensystem für einen Kraftfahrzeug-Stellantrieb, welches einen Grundkörper, zwei Stromführungen und zwei Kohlebürsten aufweist. Dabei werden Stromführungen auch als Grundkörper verwendet, auf welchem die weiteren Bestandteile des Bürstensystems befestigt sind. Weiterhin betrifft die Erfindung einen Kraftfahrzeug-Stellantrieb, in welchen ein Bürstensystem gemäß der Erfindung eingesetzt ist, sowie ein Verfahren zur Herstellung eines Kraftfahrzeug-Stellantriebes.

## Beschreibung

Die Erfindung betrifft ein Bürstensystem für einen Kraftfahrzeug-Stellantrieb, einen Kraftfahrzeug-Stellantrieb, welcher ein derartiges Bürstensystem aufweist, sowie ein Verfahren zur Herstellung eines Kraftfahrzeug-Stellantriebes.

Bürstensysteme für Kraftfahrzeug-Stellantriebe sind bereits bekannt. Derartige Bürstensysteme weisen einen aus Kunststoff bestehenden Grundkörper auf, auf welchem die weiteren Bauteile des Bürstensystems fixiert sind. Bei den genannten weiteren Bauteilen handelt es sich beispielsweise um Stromführungen, Kohlebürsten und Entstörelemente.

Aus der DE 198 05 185 A1 ist eine insbesondere zum Verstellen des Schiebedachs eines Fahrzeugs vorgesehene Antriebsvorrichtung bekannt. Diese weist einen Elektromotor auf, der mit einem Anker mit Kommutator versehen ist, welcher in einem Polgehäuse untergebracht ist. Der außerhalb des Polgehäuses liegende Teil bildet eine Getriebeantriebswelle für ein Getriebe, das in einem an das Polgehäuse anschließenden Getriebegehäuse untergebracht ist. Das Getriebegehäuse nimmt eine Leiterplatte auf. Diese trägt einen Bürstenhalter, dessen Bürsten am Kommutator des Ankers angreifen. Die Leiterplatte erstreckt sich mit ihrer größten Erstreckung im Wesentlichen quer zu einer Ankerwelle des Ankers und deckt den Kommutator des Ankers zumindest teilweise ab. Der Bürstenhalter greift in eine im Bereich des Kommutators vorgesehene Ausnehmung des Getriebegehäuses ein. Der Bürstenhalter weist einen aus Kunststoff bestehenden Grundkörper auf, welcher mit hülsenförmigen Aufnahmen für Entstördrosseln versehen ist. Weiterhin weist der Bürstenhalter Elemente auf, welche die Bürsten zur Montage des Bürstenhalters in einer Montagestellung innerhalb eines jeweiligen Bürstenköchers halten.

Der Erfindung liegt die Aufgabe zugrunde, ein Bürstensystem für einen Kraftfahrzeug-Stellantrieb zu vereinfachen.

Diese Aufgabe wird durch ein Bürstensystem mit den im Anspruch 1 angegebenen Merkmalen gelöst. Vorteilhafte Ausgestaltungen und Weiterbildungen der Erfindung ergeben sich aus den abhängigen Ansprüchen 2 - 11. Im Anspruch 12 ist ein Kraftfahrzeug-Stellantrieb angegeben, welcher aus einem Elektromotor und einem mit dem Elektromotor gekoppelten Getriebe besteht und ein aus Kunststoff bestehendes Gehäuseteil aufweist, in welchem ein Bürstensystem nach einem der Ansprüche 1 - 11 befestigt ist. Das Getriebe steht in Antriebsverbindung mit einer Abtriebswelle des Elektromotors und wird von diesem angetrieben. Die abhängigen Ansprüche 13 bis 15 haben vorteilhafte Ausgestaltungen des Kraftfahrzeug-Stellantriebs gemäß Anspruch 12 zum Gegenstand. Der Anspruch 16 betrifft ein Verfahren zur Herstellung eines Kraftfahrzeug-Stellantriebes. Vorteilhafte Ausgestaltungen des im Anspruch 16 angegebenen Verfahrens sind Gegenstand der abhängigen Ansprüche 17 und 18.

Beim Bürstensystem gemäß der Erfindung dient die zwingend notwendige Stromführung zusätzlich als Grundkörper, auf welchem die weiteren Bauteile des Bürstensystems befestigt sind, insbesondere die Kohlebürsten. Aufgrund dieser Doppelfunktion der ohnehin notwendigen Stromführungen entfällt die Notwendigkeit eines separaten Kunststoff-Grundkörpers, wie er bei bekannten Bürstensystemen vorgesehen ist. Dies entspricht einer Reduzierung des Bauteileaufwandes für ein Bürstensystem.

Vorzugsweise werden die beiden Stromführungen eines Bürstensystems zunächst in Form eines einzigen, metallischen Stanzgitters hergestellt, wobei die Stromführungen über Verbindungsstege miteinander verbunden sind. Nach dem Einsetzen und Befestigen des Stanzgitters im Getriebegehäuse können die Verbindungsstege aufgetrennt werden, um schnell und einfach zwei getrennte Stromführungen bereitzustellen.

In vorteilhafter Weise sind die Kohlebürsten des Kraftfahrzeugstellantriebes jeweils an einer Metallfeder befestigt und über diese Metallfeder mit dem Stanzgitter bzw. dem jeweiligen Grundkörper verbunden. Diese Metallfeder kann jeweils einteilig mit dem Stanzgitter ausgebildet und aus diesem herausgebogen sein, um die Kohlebürsten an der jeweils gewünschten Stelle zu positionieren. Dies reduziert die Anzahl der Bauteile des Bürstensystems weiter.

Alternativ dazu kann es sich bei den Metallfedern auch um separate Stanz-Biegeteile handeln, die an dem den Grundkörper bildenden Stanzgitter mittels einer Schweiß- oder Nietverbindung fixiert sind.

Die Befestigung des Stanzgitters im Getriebegehäuse kann unter Verwendung von Schrauben erfolgen, die durch Ausnehmungen des Stanzgitters geführt werden. Die Ausnehmungen des Stanzgitters lassen sich bei der Herstellung des Stanzgitters in einfacher Weise einbringen.

Alternativ dazu kann die Befestigung des Stanzgitters im Getriebegehäuse auch unter Verwendung von Rastmitteln erfolgen, wobei das Stanzgitter mit einer Rastnase versehen ist, die in einen Rastvorsprung des Getriebegehäuses eingreift. Dies erlaubt ein Einsetzen und Befestigen des Bürstensystems im Getriebegehäuse ohne die Notwendigkeit von separaten Befestigungsmitteln oder Befestigungswerkzeugen.

Vorzugsweise weist das Stanzgitter außenseitige Umbiegungen auf, die beim Einsetzen des Stanzgitters in das Getriebegehäuse des Kraftfahrzeug-Stellantriebes als Führungsflächen dienen. Dies erleichtert das Einsetzen des Stanzgitters erheblich.

Sind die Stromführungen, wie es Gegenstand des Anspruchs 9 ist, jeweils mit einer Stromführungs-Kontaktfahne ausgestattet, dann ist die elektrische Kontaktierung des Stanzgitters und damit des Bürstensystems mit externen Bauteilen in einfacher Weise realisierbar. Vorzugsweise handelt es sich bei diesen Stromführungs-Kontaktfahnen um einteilig mit dem Stanzgitter ausgebildete Bauteile, die aus dem Stanzgitter herausgebogen sind. Durch diese einteilige Ausgestaltung wird die Anzahl der Bauteile kleingehalten.

Vorzugsweise dienen die Stromführungen nicht nur zur Befestigung der Kohlebürsten, sondern auch als Träger für ein oder mehrere Entstörelemente, beispielsweise Entstördrosseln. Diese sind beispielsweise auf die jeweilige Stromführung aufgeschweißt. Weitere vorteilhafte Eigenschaften der Erfindung ergeben sich aus deren beispielhafter Erläuterung anhand der Figuren. Es zeigt
- Figur 1: eine perspektivische Ansicht eines Bürstensystems und eine Teilansicht eines Gehäuseteils in unmontierten Zustand,
- Figur 2: eine perspektivische Ansicht eines Bürstensystems gemäß einer zweiten Ausführungsform,
- Figur 3: eine perspektivische Ansicht der Unterseite eines Bürstensystems gemäß einer dritten Ausführungsform und
- Figur 4: eine perspektivische Ansicht der Oberseite eines Bürstensystems gemäß der Figur 3.

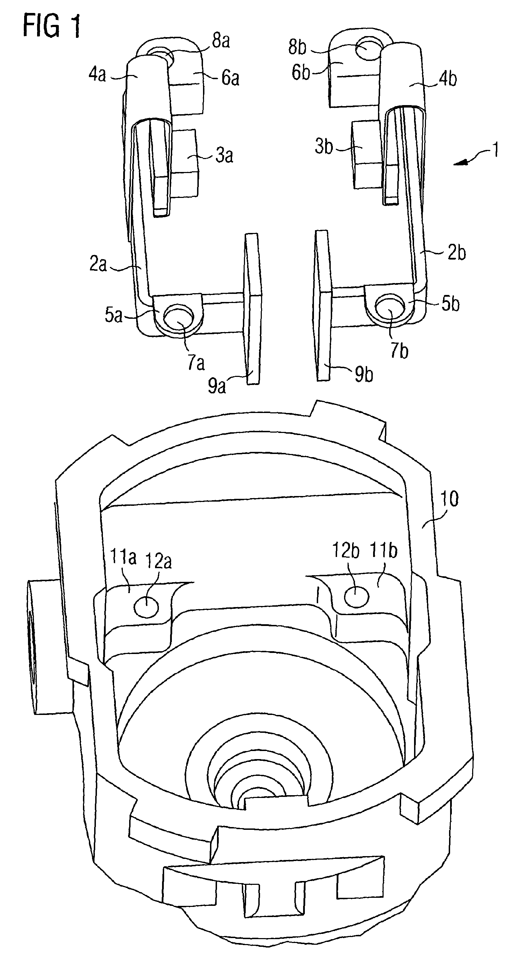

Die Figur 1 zeigt eine perspektivische Ansicht eines Bürstensystems und eines Teils eines Getriebegehäuses, in welches das Bürstensystem eingesetzt wird.

Das dargestellte Bürstensystem 1 weist Grundkörper 2a und 2b auf, bei denen es sich jeweils um ein aus Metall bestehendes Stanzbiegeteil bzw. Stanzgitter handelt. Auf diesen Grundkörpern aus Metall sind die weiteren Bestandteile des Bürstensystems befestigt. Dabei handelt es sich insbesondere um die Kohlebürsten 3a und 3b, die jeweils über eine gebogene Metallfeder 4a, 4b auf dem jeweiligen Grundkörper befestigt sind. Diese Befestigung kann mittels einer Schweiß- oder einer Nietverbindung realisiert sein. Alternativ dazu können die Metallfedern auch einteilig mit dem jeweiligen Stanzgitter ausgebildet und aus diesem herausgebogen sein.

Weiterhin weist der in der Figur 1 gezeigte Grundkörper 2a Umbiegungen 5a und 6a auf, in welche jeweils eine runde Ausnehmung 7a bzw. 8a eingestanzt ist. Der Grundkörper 2b ist mit Umbiegungen 5b und 6b versehen, in welche jeweils eine runde Ausnehmung 7b bzw. 8b eingestanzt ist. Durch diese Ausnehmungen können Befestigungsschrauben geführt werden, um den jeweiligen Grundkörper im Getriebegehäuse zu befestigen.

Zur elektrischen Kontaktierung des jeweiligen Grundkörpers 2a, 2b mit einer Elektronikeinheit oder einem Stecker weist der Grundkörper 2a eine Stromführungs-Kontaktfahne 9a und der Grundkörper 2b eine Stromführungs-Kontaktfahne 9b auf.

Bei dem in der Figur 1 gezeigten Bürstensystem 1 dienen die metallischen Grundkörper nicht nur als Stromführung, sondern auch als Träger für die weiteren Bauteile des Bürstensystems. Durch diese Doppelfunktion der jeweiligen Stromführung kann auf einen separaten, aus Kunststoff bestehenden Grundkörper, wie er bei bekannten Bürstensystemen vorgesehen ist, verzichtet werden. Dadurch ist die Anzahl der zur Realisierung eines Bürstensystems notwendigen Bauteile reduziert, der Aufbau eines Bürstensystems vereinfacht und dessen Herstellungspreis verringert.

Das in der Figur 1 gezeigte Bürstensystem 1 wird von oben in das aus Kunststoff bestehende Getriebegehäuse 10 eingesetzt, so dass die Umbiegungen 5a, 5b, 6a, 6b des Bürstensystems auf einem jeweils zugehörigen Lagerblock des Getriebegehäuses zum Liegen kommen. Von diesen Lagerblöcken sind in der Figur 1 der Lagerblock 11a und der Lagerblock 11b dargestellt. Dabei kommt nach dem Einsetzen des Bürstensystems 1 in das Getriebegehäuse 10 die Umbiegung 6a des Bürstensystems auf dem Lagerblock 11a des Getriebegehäuses zum Liegen, wobei die Ausnehmung 8a unmittelbar oberhalb eines Gewindeloches 12a des Lagerblockes 11a positioniert ist. Ferner kommt nach dem Einsetzen des Bürstensystems 1 in das Getriebegehäuse 10 die Umbiegung 6b des Bürstensystems auf dem Lagerblock 11b des Getriebegehäuses zum Liegen, wobei die Ausnehmung 8b unmittelbar oberhalb eines Gewindeloches 12b des Lagerblockes 11b positioniert ist. Die Befestigung des Bürstensystems 1 im Getriebegehäuse 10 erfolgt unter Verwendung von Schrauben, die durch die Ausnehmung in der jeweiligen Umbiegung geführt und in das Gewindeloch des jeweiligen Lagerblockes eingeschraubt werden.

Nach der Befestigung des Bürstensystems im Getriebegehäuse wird das Getriebegehäuse mit darin befestigtem Bürstensystem mit dem Motorgehäuse des Kraftfahrzeug-Stellantriebes zusammengefügt.

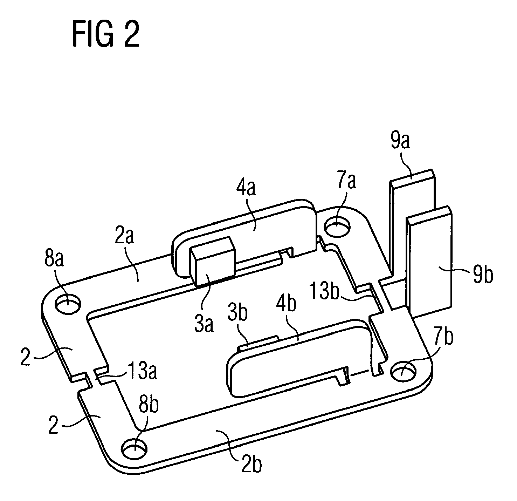

Die Figur 2 zeigt eine perspektivische Ansicht eines Bürstensystems gemäß einer zweiten Ausführungsform. Das dargestellte Bürstensystem weist ein einteiliges, mittels eines Stanz-Biege-Vorganges hergestelltes metallisches Stanzgitter 2 auf. Dieses bildet zwei metallische Grundkörper 2a und 2b, die über Verbindungsstege 13a und 13b miteinander in Verbindung stehen. Weiterhin weist das dargestellte Bürstensystem Blattfedern 4a und 4b auf, die jeweils einteilig mit dem Stanzgitter ausgebildet und aus diesem herausgebogen sind. An der Blattfeder 4a ist eine Kohlebürste 3a und an der Blattfeder 4b eine Kohlebürste 3b befestigt. Ferner ist der Grundkörper 2a im Bereich seiner Ecken mit Ausnehmungen 7a und 8a versehen. Der Grundkörper 2b weist im Bereich seiner Ecken Ausnehmungen 7b und 8b auf. Durch die genannten Ausnehmungen sind Befestigungsschrauben führbar. Weiterhin ist der Grundkörper 2a mit einer Stromführungs-Kontaktfahne 9a und der Grundkörper 2b mit einer Stromführungs-Kontaktfahne 9b versehen. Diese beiden Stromführungs-Kontaktfahnen sind ebenfalls Bestandteil des Stanzgitters 2 und wurden mittels eines Biegevorganges aus der von den Grundkörpern 2a und 2b gebildeten Ebene herausgebogen. Die genannten Stromführungs-Kontaktfahnen 9a und 9b dienen zur elektrischen Kontaktierung des jeweiligen Grundkörpers mit einer nicht dargestellten Elektronikeinheit oder einem Stecker.

Das in der Figur 2 dargestellte Bürstensystem wird ebenso wie das in der Figur 1 gezeigte Bürstensystem in ein aus Kunststoff bestehendes Getriebegehäuse eingesetzt. Dabei kommen die Ausnehmungen 7a, 7b, 8a und 8b des Stanzgitters auf einem jeweils zugehörigen Lagerblock des Getriebegehäuses derart zum Liegen, dass sie unmittelbar oberhalb eines jeweils zugehörigen Gewindeloches des jeweiligen Lagerblocks positioniert sind. Die Befestigung des in der Figur 2 gezeigten Stanzgitters 2 im Getriebegehäuse erfolgt unter Verwendung von Schrauben, die durch die jeweilige Ausnehmung im Stanzgitter geführt und in ein Gewindeloch des jeweiligen Lagerblockes des Getriebegehäuses eingeschraubt werden.

Nach der Befestigung des Stanzgitters 2 im Getriebegehäuse erfolgt ein Auftrennen der Verbindungsstege 13a und 13b, so dass die beiden Grundkörper 2a und 2b elektrisch nicht mehr miteinander verbunden sind und getrennte Stormführungen bilden. Nach dem Auftrennen der Verbindungsstege wird das Getriebegehäuse mit darin befestigtem Bürstensystem mit dem Motorgehäuse des Kraftfahrzeug-Stellantriebes zusammengefügt.

Auch bei der in der Figur 2 gezeigten Ausführungsform dient das die Grundkörper 2a und 2b bildende Stanzgitter 2 nicht nur als Stromführung, sondern auch als Träger für die weiteren Bauteile des Bürstensystems. Auch hier kann durch die Doppelfunktion der jeweiligen Stromführung auf einen separaten, aus Kunststoff bestehenden Grundkörper, wie er bei bekannten Bürstensystemen vorgesehen ist, verzichtet werden. Dadurch ist auch bei dieser Ausführungsform die Anzahl der zur Realisierung eines Bürstensystems notwendigen Bauteile reduziert, der Aufbau eines Bürstensystems vereinfacht und dessen Herstellungspreis verringert. Ferner ist durch den zunächst einteiligen Aufbau beider Grundkörper als Stanzgitter das Einsetzen des Bürstensystems in das Getriebegehäuse erleichtert. Das Trennen der beiden Grundkörper durch ein Auftrennen der Verbindungsstege 13a und 13b zum Zwecke einer Bildung getrennter Stromführungen erfolgt erst nach der Befestigung des Stanzgitters im Getriebegehäuse.

Alternativ zu der vorstehend beschriebenen Befestigung des Bürstensystems im Getriebegehäuse mittels Schrauben kann die Befestigung des Bürstensystems im Getriebegehäuse auch unter Verwendung von Kunststoffzapfen erfolgen, die zunächst im Getriebegehäuse hochstehen und dann durch ein Heißverstemmen niedergedrückt werden.

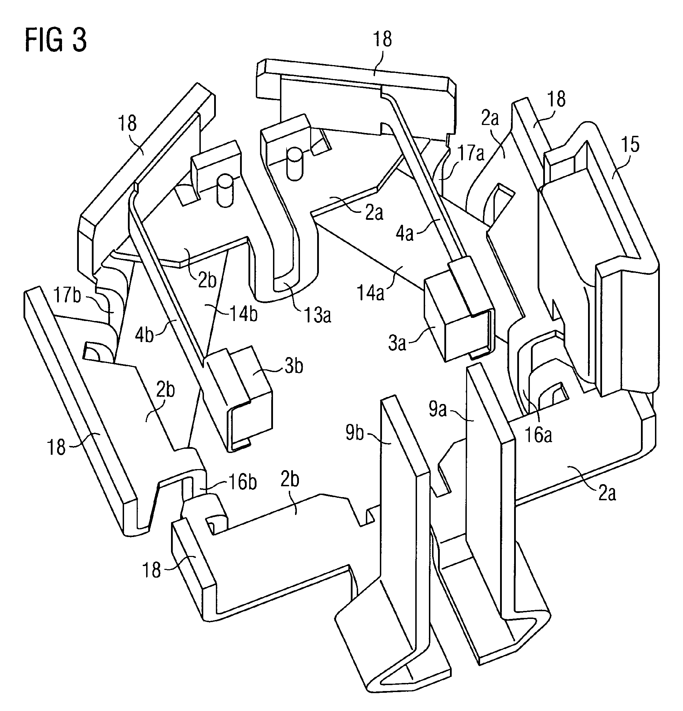

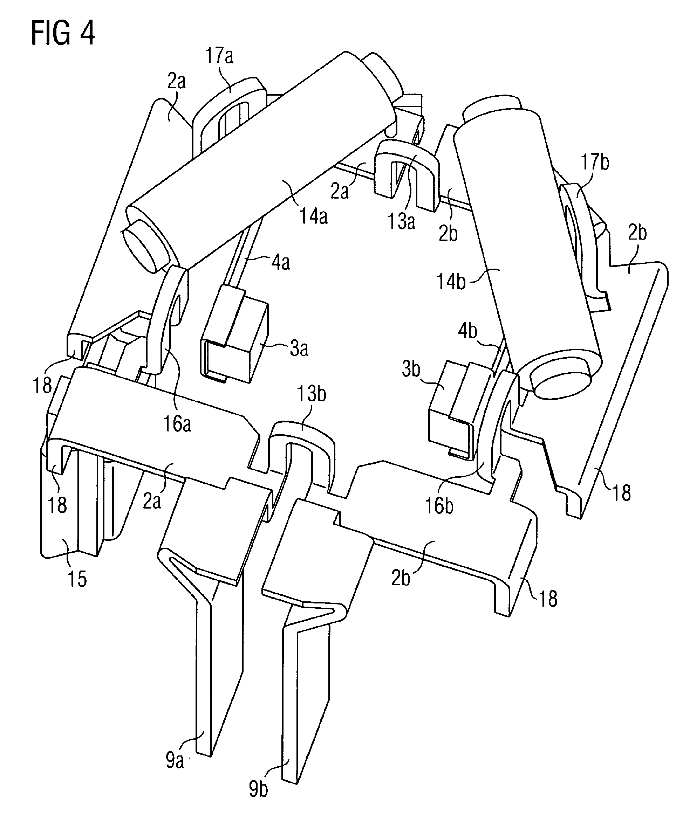

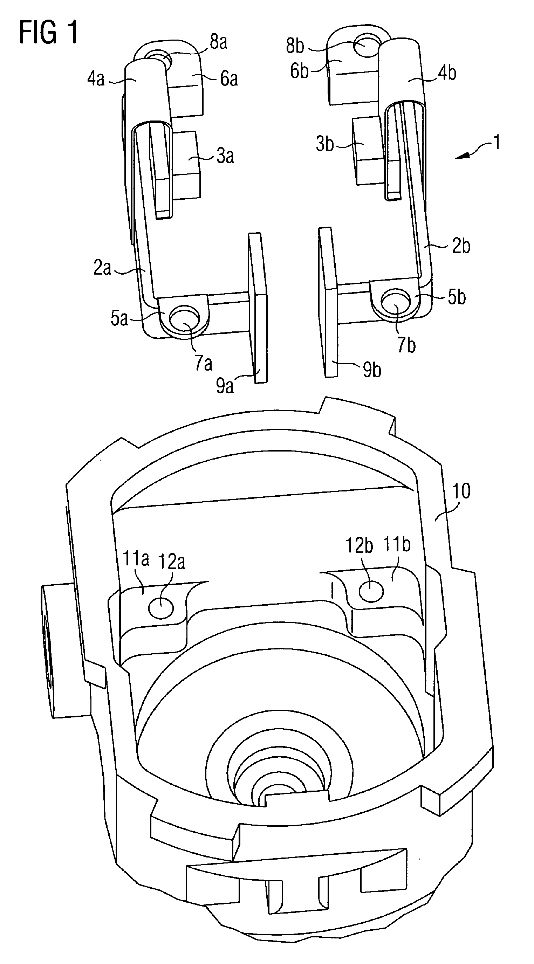

Die Figur 3 zeigt eine perspektivische Ansicht der Unterseite eines Bürstensystems gemäß einer dritten Ausführungsform und die Figur 4 eine perspektivische Ansicht der Oberseite des in der Figur 3 dargestellten Bürstensystems. Das gezeigte Bürstensystem weist ein einteiliges, mittels eines Stanz-Biegevorgangs hergestelltes metallisches Stanzgitter auf. Dieses bildet zwei metallische Grundkörper 2a und 2b, die über Verbindungsstege 13a und 13b miteinander in Verbindung stehen. Weiterhin weist das dargestellte Bürstensystem Blattfedern 4a und 4b auf, die am metallischen Grundkörper 2a bzw. 2b befestigt sind, beispielsweise angeschweißt. An der Blattfeder 4a ist eine Kohlebürste 3a und an der Blattfeder 4b eine Kohlebürste 3b befestigt, beispielsweise aufgesteckt. Ferner ist das Stanzgitter mit Rastnasen versehen, die beim Einsetzen des Stanzgitters in das Getriebegehäuse in Rastaussparungen des Getriebegehäuses einrasten. An seinen Außenseiten weist das Stanzgitter Umbiegungen 18 auf, die beim Einsetzen des Stanzgitters in das Getriebegehäuse als Führungsflächen dienen.

Jeder der Grundkörper 2a und 2b besteht seinerseits aus Grundkörperabschnitten, die miteinander über weitere Verbindungsstege 16a, 16b, 17a, 17b miteinander verbunden sind. Ferner ist der Grundkörper 2a mit einer Stromführungs-Kontaktfahne 9a und der Grundkörper 2b mit einer Stromführungs-Kontaktfahne 9b versehen. Diese beiden Stromführungs-Kontaktfahnen sind ebenfalls Bestandteil des Stanzgitters und wurden mittels eines Biegevorganges aus der von den Grundkörpern 2a und 2b gebildeten Ebene herausgebogen. Die genannten Stromführungs-Kontaktfahnen 9a und 9b dienen zur elektrischen Kontaktierung des jeweiligen Grundkörpers mit einer nicht dargestellten Elektronikeinheit oder einem Stecker.

Weiterhin ist auf dem Grundkörper 2a eine Entstördrossel 14a und auf dem Grundkörper 2b eine Entstördrossel 14b befestigt, beispielsweise aufgeschweißt. Der Grundkörper 2a dient ferner als Träger für ein Thermoschutzelement 15, das den Motor des Kraftfahrzeug-Stellantriebes vor Überhitzung schützt.

Ist ein Bürstensystem, wie es in den Figuren 3 und 4 gezeigt ist, in ein zugehöriges Getriebegehäuse eingesetzt und mit diesem verrastet, dann werden die Verbindungsstege 13a und 13b aufgetrennt, so dass die beiden Grundkörper 2a und 2b elektrisch nicht mehr miteinander verbunden sind und getrennte Stromführungen bilden. Weiterhin werden nach der Verrastung des Bürstensystems im Getriebegehäuse auch die weiteren Verbindungsstege 16a, 17a und 17b aufgetrennt. Durch die Auftrennung des Verbindungsstegs 16a wird die sich parallel zum Thermoschutzelement 15 erstreckende elektrische Verbindung aufgetrennt, so dass das Thermoschutzelement wirksam in den elektrischen Verbindungsweg zwischen der Kohlebürste 3a und der Stromführungs-Kontaktfahne 91a geschaltet wird. Durch die Auftrennung des Verbindungsstegs 17a wird die sich parallel zur Entstördrossel 14a erstreckende elektrische Verbindung aufgetrennt, so dass die Entstördrossel 14a wirksam in den elektrischen Verbindungsweg zwischen der Kohlebürste 3a und der Stromführungs-Kontaktfahne 9a geschaltet wird. Durch die Auftrennung des Verbindungsstegs 17b wird die sich parallel zur Entstördrossel 14b erstreckende elektrische Verbindung aufgetrennt, so dass die Entstördrossel 14b wirksam in den elektrischen Verbindungsweg zwischen der Kohlebürste 3b und der Stromführungs-Kontaktfahne 9b geschaltet wird. Der Verbindungssteg 16b wird nicht aufgetrennt, da bei der gezeigten Ausführungsform kein dazu paralleles Bauteil vorgesehen ist.

Auch bei der in den Figuren 3 und 4 gezeigten Ausführungsform dient das die Grundkörper 2a und 2b bildende Stanzgitter 2 nicht nur zur Stromführung, sondern auch als Träger für die weiteren Bauteile des Bürstensystems. Auch hier kann durch die Doppelfunktion der jeweiligen Stromführung auf einen separaten, aus Kunststoff bestehenden Grundkörper, wie er bei bekannten Bürstensystemen vorgesehen ist, verzichtet werden. Dadurch ist auch bei dieser Ausführungsform die Anzahl der zur Realisierung eines Bürstensystems notwendigen Bauteile reduziert, der Aufbau eines Bürstensystems vereinfacht und dessen Herstellungspreis verringert. Ferner ist durch den zunächst einteiligen Aufbau beider Grundkörper als Stanzgitter das Einsetzen des Bürstensystems in das Getriebegehäuse erleichtert. Eine weitere Erleichterung des Einsetzens des Stanzgitters in das Getriebegehäuse wird durch die an den Au-βenseiten vorgesehenen Umbiegungen 18 des Stanzgitters erreicht, die beim Einsetzen als Führungsflächen dienen. Das Trennen der beiden Grundkörper durch ein Auftrennen der Verbindungsstege 13a und 13b zum Zwecke einer Bildung getrennter Stromführungen erfolgt erst nach dem Einrasten des Stanzgitters in Rastgegenstücke des Getriebegehäuses. In vorteilhafter Weise sind bei dieser Ausführungsform weitere Verbindungsstege zwischen den einzelnen Abschnitten des jeweiligen Grundkörpers vorgesehen. Diese weiteren Verbindungsstege können nach dem Einrasten des Stanzgitters in das Getriebegehäuse bei Bedarf ebenfalls aufgetrennt werden, wenn dies notwendig ist, um weitere auf dem Stanzgitter befestigte Bauteile wirksam in den elektrischen Signalweg zwischen der jeweiligen Kohlebürste und die jeweils zugehörige Stromführungs-Kontaktfahne zu schalten.

## Patentansprüche

1. Bürstensystem für einen Kraftfahrzeug-Stellantrieb, mit einem Grundkörper, zwei Stromführungen und zwei Kohlebürsten, die mit jeweils einer der Stromführungen in Verbindung stehen, **dadurch gekennzeichnet, dass** die Stromführungen (2a, 2b) jeweils als Grundkörper dienen, auf welchem die jeweilige Kohlebürste (3a, 3b) befestigt ist.

2. Bürstensystem nach Anspruch 1, **dadurch gekennzeichnet, dass** die beiden Stromführungen in Form eines metallischen Stanzgitters (2) realisiert sind, bei welchem die beiden Stromführungen (2a, 2b) über Verbindungsstege (13a, 13b) miteinander verbunden sind.

3. Bürstensystem nach Anspruch 1 oder 2, **dadurch gekennzeichnet, dass** jede der Kohlebürsten (3a, 3b) an einer Metallfeder (4a, 4b) befestigt und über diese Metallfeder mit dem jeweiligen Grundkörper (2a, 2b) elektrisch kontaktiert ist.

4. Bürstensystem nach Anspruch 3, **dadurch gekennzeichnet, dass** die Metallfeder jeweils einteilig mit dem Stanzgitter ausgebildet und aus dem Stanzgitter herausgebogen ist.

5. Bürstensystem nach Anspruch 3, **dadurch gekennzeichnet, dass** die Metallfeder jeweils ein Stanz-Biegeteil ist, welches am Stanzgitter mittels einer Schweiß- oder einer Nietverbindung fixiert ist.

6. Bürstensystem nach einem der Ansprüche 2 - 5, **dadurch gekennzeichnet, dass** das Stanzgitter mit Ausnehmungen (7a, 7b, 8a, 8b) versehen ist, durch welche Befestigungsschrauben führbar sind.

7. Bürstensystem nach einem der Ansprüche 2 - 5, **dadurch gekennzeichnet, dass** das Stanzgitter mit Rastnasen versehen ist.

8. Bürstensystem nach Anspruch 6 oder 7, **dadurch gekennzeichnet, dass** das Stanzgitter außenseitige Umbiegungen (18) aufweist, die beim Einsetzen des Stanzgitters in ein Getriebegehäuse als Führungsflächen dienen.

9. Bürstensystem nach einem der vorhergehenden Ansprüche, **dadurch gekennzeichnet, dass** jede der Stromführungen (2a, 2b) eine Stromführungs-Kontaktfahne (9a, 9b) aufweist.

10. Bürstensystem nach einem der vorhergehenden Ansprüche, **dadurch gekennzeichnet, dass** die Stromführungen jeweils als Träger für mindestens ein Entstörelement (14a, 14b) dienen.

11. Bürstensystem nach Anspruch 10, **dadurch gekennzeichnet, dass** die Entstörelemente auf die jeweilige Stromführung aufgeschweißt sind.

12. Kraftfahrzeug-Stellantrieb bestehend aus einem Elektromotor und einem mit dem Elektromotor gekoppelten Getriebe, welcher ein aus Kunststoff bestehendes Gehäuseteil aufweist, in welchem Gehäuseteil ein Bürstensystem nach einem der Ansprüche 1 - 11 befestigt ist.

13. Kraftfahrzeug-Stellantrieb nach Anspruch 12, **dadurch gekennzeichnet, dass** das aus Kunststoff bestehende Gehäuseteil sowohl als Gehäuseteil für den Elektromotor als auch als Gehäuseteil für das Getriebe dient.

14. Kraftfahrzeug-Stellantrieb nach Anspruch 12 oder 13, **dadurch gekennzeichnet, dass** das Bürstensystem im Gehäuseteil mittels durch die Ausnehmungen des Stanzgitters geführter Schrauben befestigt ist.

15. Kraftfahrzeug-Stellantrieb nach einem der Ansprüche 12 bis 14, **dadurch gekennzeichnet, dass** das Getriebegehäuse mit Rastvorsprüngen versehen ist, die zum Einschnappen des Bürstensystems in Rastnasen des Stanzgitters vorgesehen sind.

16. Verfahren zur Herstellung eines Kraftfahrzeug-Stellantriebes mit folgenden Schritten:
- Herstellung eines einteiligen, metallischen Stanzgitters,
- Herausbiegen von Metallfedern aus dem Stanzgitter oder Anbringen von Metallfedern am Stanzgitter,
- Befestigung von Kohlebürsten an den Metallfedern,
- Einlegen des Stanzgitters mit an den Metallfedern befestigten Kohlebürsten in ein aus Kunststoff bestehendes Getriebegehäuse,
- Befestigen des Stanzgitters mit an den Metallfedern befestigten Kohlebürsten im Getriebegehäuse,
- Auftrennung zweier Verbindungsstege des Stanzgitters, um zwei getrennte Stromführungen bereitzustellen und
- Zusammenfügen des Getriebegehäuses mit darin befestigtem Bürstensystem mit dem Motorgehäuse des Kraftfahrzeug-Stellantriebes.

17. Verfahren nach Anspruch 15, **dadurch gekennzeichnet, dass** das Befestigen des Stanzgitters im Getriebegehäuse unter Verwendung von Schrauben vorgenommen wird, die durch Ausnehmungen des Stanzgitters geführt werden.

18. Verfahren nach Anspruch 15, **dadurch gekennzeichnet, dass** das Befestigen des Stanzgitters im Getriebegehäuse durch ein Eindrücken des Stanzgitters in das Getriebegehäuse erfolgt, wobei Rastnasen des Stanzgitters in Rastvorsprünge des Getriebegehäuses einrasten.
